# EUROPEAN PATENT APPLICATION

(11) **EP 4 307 077 A1**
(43) Date of publication of application: **17.01.2024**
(21) Application number: 22193337.7
(22) Date of filing: 31.08.2022
(51) Int. Cl.: G05G 1/44, B60K 26/02, B60T 7/04, B60T 7/06, G05G 1/50

(54) **PEDAL DEVICE**

(30) Priority: 14.07.2022 EP 22184985
(71) Applicant: KNORR-BREMSE Systeme für Nutzfahrzeuge GmbH, 80809 München (DE)
(72) Inventor: Papp, Lajos, 6100 Kiskunfélegyháza (HU)
(74) Representative: DTS Patent- und Rechtsanwälte Schnekenbühl und Partner mbB

(57) **Abstract**

The present invention relates to a pedal device (100) for a vehicle, especially utility vehicle, comprising: an interface body (102) being mountable to a part, in particular to a firewall, of the vehicle; a pedal carrier (104) for pivotally accommodating a treadle (108); and a valve carrier (106) for a valve (110) being mountable thereto, the valve (110) being operable by the treadle (108), wherein the pedal carrier (104) and the valve carrier (106) are mountable or mounted to each other, and the valve carrier (106) and the interface body (102) are mountable or mounted to each other,
wherein the pedal carrier (104) is made of one single piece of metal sheet and/or the valve carrier (106) is made of one single piece of metal sheet and/or the interface body (102) is made of one single piece of metal sheet.

## Description

The present invention relates to a pedal device for a vehicle, especially utility vehicle.

In general, pedal devices for vehicles are known in connection with, e.g., driver workstations and/or positions for and/or in commercial vehicles.

Pedal devices for vehicles, especially for commercial vehicles, can have very complex and also very bulky mechanics, which can make assembly and/or manufacturing difficult. Further, pedal devices are particularly assembled and/or manufactured for one particular vehicle type. In this respect, a large number of components of said pedal devices are usually manufactured by pressure die casting. Hence, when it comes to further and/or different vehicle types, this usually results in a new product development of said pedal devices and/or can result in an increase of time and costs with regards to designing, assembling and/or manufacturing of said pedal devices for said further and/or different vehicle types.

In view of the above, it is the problem of the invention to improve a pedal device for a vehicle, especially utility vehicle, advantageously, in particular with respect to modularity and/or adaptability, in particular while being cost effective.

According to the invention, this problem is solved by a pedal device for a vehicle, especially utility vehicle, according to claim 1.

Correspondingly, the pedal device for a vehicle, especially utility vehicle, comprises: an interface body being mountable to a part, in particular to a firewall, of the vehicle; a pedal carrier for pivotally accommodating a treadle; and a valve carrier for a valve being mountable thereto, the valve being operable by the treadle, wherein the pedal carrier and the valve carrier are mountable or mounted to each other, and the valve carrier and the interface body are mountable or mounted to each other, wherein the pedal carrier is made of one single piece of metal sheet and/or the valve carrier is made of one single piece of metal sheet and/or the interface body is made of one single piece of metal sheet.

In particular, the invention is based on the idea that the pedal device may substantially be split in sub-assemblies, i.e., the interface body, the pedal carrier and the valve carrier, which are removably mountable or mounted to each other. Accordingly, said sub-assemblies may easily be changed and/or switched depending on the vehicle type. Hence, the sub-assemblies (or even only one sub assembly) may easily be adapted to fit different vehicle types, in particular without having to re-develop the whole pedal device. In other words, due to the sub-assemblies, an increased modularity and/or adaptability may be achieved. Furthermore, since the pedal carrier is made of one single piece of metal sheet and/or the valve carrier is made of one single piece of metal sheet and/or the interface body is made of one single piece of metal sheet, adapting said sub-assemblies may be conducted in an easy and/or cost-effective manner with regard to manufacturing and, subsequently, assembling.

The interface body may be formed as a basic carrier or basic carrier plate for interfacing with and/or being mountable to the part, in particular to the firewall, of the vehicle, wherein, in particular, the firewall may be a bulkhead firewall, which, in particular, may have an opening therein for providing access from a vehicle cabin to an engine compartment.

The pedal device may comprise the valve being operable by the treadle, wherein the valve is mountable or mounted to a side of the valve carrier being opposite to a side, to which the pedal carrier is mountable or mounted. Accordingly, a separation of the engine compartment and the vehicle cabin may be maintained in a simple manner and/or assembly of the valve may be conducted with a reduced risk of mis-assembly due to the clear disposition of elements.

The valve carrier may have a substantially bowl-like shape, which defines an accommodating space for at least partially accommodating the valve, when the valve is mounted to the valve carrier. Accordingly, the pedal device may have a compact design and/or a space behind the firewall, i.e., within the engine compartment, may be used more economical.

The substantially bowl-like shape may be substantially wedge-shaped. Optionally, a wedge angle between a first side of the substantially bowl-like shape facing towards the pedal carrier and a second side of the substantially bowl-like shape facing towards the interface body may be between 10 and 45°, in particular 20 and 35°, preferably 28° ± 10%. Accordingly, due to said wedge shape, the valve carrier may provide a simple solution for providing an ergonomical orientation of the treadle (when mounted), in particular, thereby avoiding a need for a complex shape of components of the treadle.

The pedal device may comprise the treadle being pivotally mounted to the pedal carrier for operating the valve, wherein the treadle may at least comprise an actuation element for operating the valve depending on an amount of pivoting, and wherein the pedal carrier and the valve carrier may each comprise an access opening being arranged in an overlapping and/or coinciding manner, through which the actuation element extends for being operationally connectable or connected to the valve. Accordingly, a simple solution may be provided for allowing the treadle to engage and/or operate the valve through the pedal carrier and the valve carrier, which solution may easily be implementable or implemented in the pedal carrier and the valve carrier, respectively.

The pedal carrier may be substantially U-shaped, wherein the U-shape includes a base portion, a first side portion and a second side portion, wherein each side portion may extend from opposite ends of the base portion and may each comprise a reception for receiving a pedal shaft of thetreadle, by which the treadle is pivotable in a mounted state. Accordingly, a stable structure being easily manufactured may be provided for reliably holding the pedal shaft of the treadleand thereby ensuring a stable pivoting movabilty thereof.

The pedal carrier may comprise a stepped or bent portion, wherein, when the pedal carrier and the valve carrier are mounted to each other, the stepped or bent portion may abut at least two side walls of the valve carrier, which are oriented in a transverse manner to each other. Accordingly, a stability between the pedal carrier and the valve carrier may be increased, in particular with respect to torque being received via the treadle.

The base portion may be formed as the stepped portion or may further comprise the bent portion. Accordingly, the stepped structure may be integrated in the base portion, thereby allowing the stepped structure to be manufactured as a part of the base portion and, hence, simplifying the manufacturing process and keeping the number of (separate) parts of the pedal device low.

The pedal carrier may comprise a stopping element for limiting the pivoting movability of the treadle, wherein, optionally, the stopping element may extend from the base portion. Accordingly, the stopping element may be integrated in the pedal carrier, thereby allowing the stopping element to be manufactured as a part of the pedal carrier and, hence, simplifying the manufacturing process and keeping the number of (separate) parts of the pedal device low.

The pedal device may comprise one or more fastening elements for fixing the pedal carrier and the valve carrier to each other, wherein, in a mounted state, each fastening element may extend through the pedal carrier and the valve carrier such as to protrude from the valve carrier for allowing the valve to be fixable or fixed therewith. Accordingly, the pedal carrier and the valve carrier and, potentially, the valve may be fixed together and, hence, separated again via one or more fastening elements. Therefore, assembly and/or service and/or repair processes may be conducted in a more effective manner.

Each fastening element may fixe the pedal carrier, the valve carrier and the valve to each other, to thereby form a sub-assembly being removably mountable or mounted to the interface body. Accordingly, a further, e.g., larger, sub-assembly may be formed to thereby enhance and/or increase the modularity and/or adaptability of the pedal device even further. Furthermore, assembly and/or service and/or repair processes may be conducted in an even more effective manner.

The one or more fastening elements may comprise at least one bolt, at least one screw and/or at least one rivet, and/or, in case of more than one fastening element, any combination thereof. This may provide a cost-effective solution with respect to fastening means, since standard fastening means according to engineer standards and/or code may be used.

The valve carrier may be made of a steel sheet substantially formed by a deep drawing manufacturing process. In other words, a method for manufacturing the valve carrier may comprise deep drawing of a, e.g., one single, steel sheet for substantially forming the valve carrier. This may provide a cost-effective way for production, in particular mass production.

The pedal carrier may be made of a steel sheet substantially formed by a bending manufacturing process. In other words, a method for manufacturing the pedal carrier may comprise bending of a, e.g., one single, steel sheet for substantially forming the pedal carrier. This may provide a cost-effective way for production, in particular mass production.

These and other aspects of the present invention will now be described in more detail, with reference to the appended drawings showing exemplary embodiments of the invention, wherein:
Fig. 1 depicts a pedal device for a vehicle, especially utility vehicle, according an exemplary embodiment of the present invention; and
Fig. 2 depicts the pedal device of Fig. 1 in an exploded view;
Fig. 3 depicts a second embodiment of the pedal device; and
Fig. 4 depicts parts of the second embodiment of the pedal device of Fig. 3.

Identical or functionally equivalent elements are denoted with the same reference signs throughout the figures.

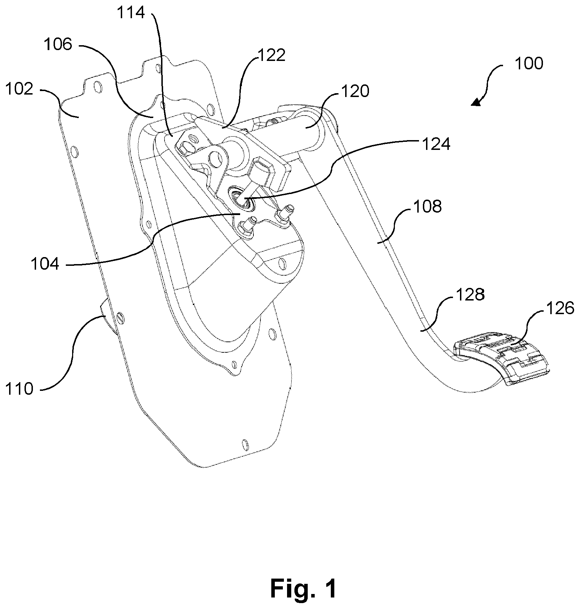

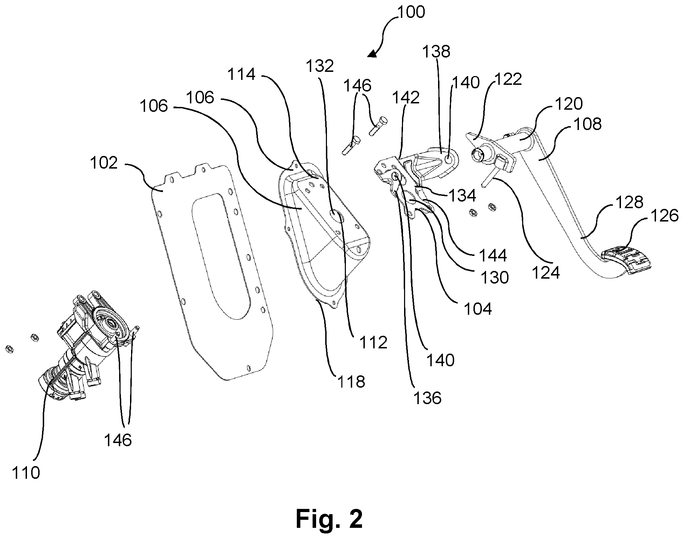

Turing to Figs. 1 and 2, a pedal device 100 for a vehicle, especially utility vehicle, according an exemplary embodiment of the present invention is shown.

The pedal device 100 comprises an interface body 102, a pedal carrier 104, a valve carrier 106, a treadle 108, and a valve 110.

The interface body 102 is formed as a basic carrier or a basic carrier plate.

The interface body 102 is mountable to a part, in particular to a firewall, of the vehicle.

The interface body 102 is provided with one or more openings for reveiving respective fastening means for mounting the interface body 102 to said part of the vehicle.

In other words, the interface body 102 is configured for interfacing with and/or being mountable to the part, in particular to the firewall, of the vehicle.

The firewall may be a bulkhead firewall, which, in particular, may have an opening therein for providing access from a vehicle cabin to an engine compartment, for example, for a connecting line to the valve 110.

The pedal carrier 104 is configured for pivotally accommodating the treadle 108.

The valve carrier 106 is configured for the valve 110 being mountable thereto.

The valve 110 is operable by the treadle 108.

As can be seen in Fig. 1, the pedal carrier 104 and the valve carrier 106 are mounted to each other, and the valve carrier 106 and the interface body 102 are mounted to each other.

As can be particularly seen in Fig. 2, the pedal carrier 104 is made of one single piece of metal sheet, and the valve carrier 106 is made of one single piece of metal sheet, and the interface body 102 is made of one single piece of metal sheet.

The valve carrier 106 is made of a steel sheet substantially formed by a deep drawing manufacturing process.

The pedal carrier 104 is made of a steel sheet substantially formed by a bending manufacturing process.

In particular, the valve 110 is mounted to a first side 112 of the valve carrier 106 being opposite to a second side 114, to which the pedal carrier 104 is mountable or mounted.

The first and second side 112, 114 are substantially even.

The valve carrier 106 has a substantially bowl-like shape 116.

The substantially bowl-like shape 116 is substantially wedge-shaped.

A wedge angle between a side of the substantially bowl-like shape 116 facing towards the pedal carrier 104, which is said second side 114, and a further side 118 of the substantially bowl-like shape 116 facing towards the interface body 102 is 28° ± 10%.

As can be seen in Fig. 1, the substantially bowl-like shape 116 defines an accommodating space for at least partially accommodating the valve 110, when the valve 110 is mounted to the valve carrier 106.

The treadle 108 comprises a pedal shaft 120, a cam 122, an actuation element 124, a pedal pad 126 and a lever arm 128.

The pedal pad 126 is fixedly attached to the pedal shaft 120 by means of the lever arm 128 and the cam 122 is also fixedly attached to the pedal shaft 120.

The pedal shaft 120 is pivotally mounted to the pedal carrier 104.

In other words, the treadle 108 is pivotally mounted to the pedal carrier 104 by means of the pedal shaft 120, e.g., for operating the valve 110.

The actuation element 124 is movably attached to an end of the cam 122 for converting a pivoting movement of the cam 122 into a translatory movement of the actuation element 124 in order to be able to operate the valve 110 (e.g., when the pedal pad 126 is pushed by an operator/driver).

In other words, the actuation element 124 is configured for operating the valve 110 depending on an amount of pivoting of the rest of the treadle 108, in particular the cam 122.

In this respect, the actuation element 124 extends through a respective access opening 130, 132 of the pedal carrier 104 and the valve carrier 106, which (openings) are arranged in an overlapping and/or coinciding manner, and is operationally connected to the valve 110 (see Fig. 1).

In other words, the pedal carrier 104 comprises an access opening 130 and the valve carrier 106 comprises an access opening 132, wherein each access opening 130, 132 is configured for receiving the actuation element 124.

As can be seen in Fig. 2, the pedal carrier 104 is substantially U-shaped.

The U-shape includes a base portion 134, a first side portion 136 and a second side portion 138.

Each side portion 136, 138 extends from opposite ends of the base portion 134.

Each side portion 136, 138 comprises a reception 140 for receiving the pedal shaft 120 of the treadle 108, by which the treadle 108 is pivotable in a mounted state.

The pedal carrier 104, in particular the base portion 134, comprises a stepped or bent portion 142.

When the pedal carrier 104 and the valve carrier 106 are mounted to each other (see Fig. 1), the stepped or bent portion 142 abuts at least two side walls of the valve carrier 106, i.e. the second side 114 and a side wall being oriented in a transverse manner to the second side 114.

The pedal carrier 104 also comprises a stopping element 144 for limiting the pivoting movability of the treadle 108.

The stopping element 144 extends from the base portion 134 in a direction towards the pedal pad 126.

It may be further conceivable, that the stopping element 144 is configured to hold a spring (not shown in the figures) on a first end, wherein a second end of the spring is attached to the lever arm 128 and/or the pedal shaft 120. Accordingly, the treadle108 can be biased to a peredeterimed position and/or can be limited in its pivoting movability.

As shown in Figs. 1 and 2, the pedal device 100 further comprises one or more fastening elements 146, here four fastening elements 146, for fixing the pedal carrier 104 and the valve carrier 106 to each other.

In a mounted state, each fastening element 146 extends through the pedal carrier 104, the valve carrier 106 and the valve 110, to thereby form a sub-assembly being removably mountable or mounted to the interface body 102.

The fastening elements 146 are formed as screw bolts and nuts in the present embodiment. However, other fastening elements 146 may also be conceivable.

The interface body 102 and the valve carrier 106 are fastened together via screw bolts (not shown in the figures). In this respect, both, the interface body 102 and the valve carrier 106, respectively comprise corresponding openings for receiving said screw bolts (openings are only shown in the valve carrier 106 for clarity). However, other fastening means may also be conceivable.

Due to the interface body 102, the pedal carrier 104 and the valve carrier 106 being separately configured and removably mountable or mounted to each other, each of said components can easily be changed and/or switched depending on a vehicle type, in which the pedal device 100 is to be integrated. Hence, each of the interface body 102, the pedal carrier 104 and the valve carrier 106 can easily be adapted to fit different vehicle types, in particular without having to re-develop the whole pedal device 100.

In other words, due to the interface body 102, the pedal carrier 104 and the valve carrier 106, an increased modularity and/or adaptability can be achieved.

Furthermore, since the pedal carrier 104 is made of one single piece of metal sheet and the valve carrier 106 is made of one single piece of metal sheet and the interface body 102 is made of one single piece of metal sheet, adapting said components can be conducted in an easy and/or cost-effective manner with regards to manufacturing and, subsequently, assembling.

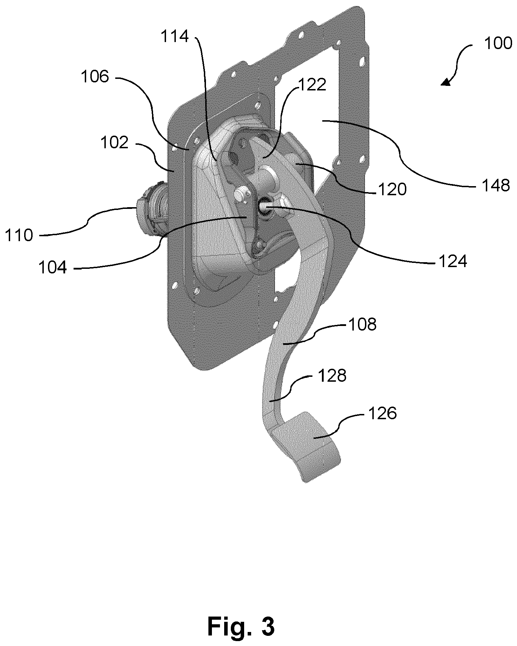

In Fig. 3, a second embodiment of the pedal device 100 is shown.

The second embodiment differs inter alia from the embodiment as presented in Figs. 1 and 2 in that the interface body 102 additionally comprises a further recess 148 which can be provided in particular for receiving or accommodating a further device.

Furthermore, in particular the valve carrier 106 and the pedal carrier 104 have a different shape whose extension in the width direction (approximately from left to right in the figure planes) is greater. Consequently, the force applied to the treadle 108 is transferred via the pedal shaft 122 to larger area of pedal carrier 104 and thus, the second side 114 of the valve carrier 106, to which the pedal carrier 104 is mountable or mounted.

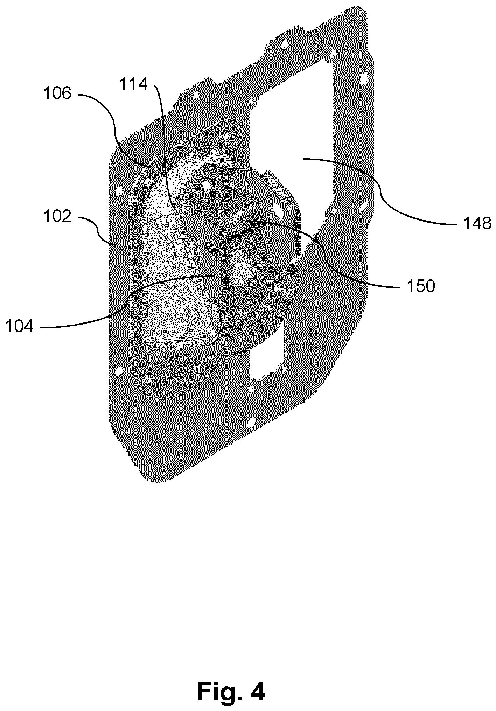

In Fig. 4, only the interface body 102, the valve carrier 106, and the pedal carrier 104 are presented.

It can be inferred from Fig. 4 that the pedal carrier 104 of the second embodiment has a transverse stiffening 150 arranged between the first side portion 136 and the second side portion 138. The transverse stiffening 150 may be a component of the pedal carrier 104 made of the same material or a separate component that is arranged in the corresponding position.

The transverse stiffening 150 increases the stability of the pedal carrier, especially that of the first and the second side portion 136, 138 which receive the pedal shaft 122.

Referring to both embodiments shown in Fig. 1 to 4, it is noted that the interface body 102 is configured for a particular vehicle set up regarding its orientation, in particular regarding a left-hand drive orientation. It should be understood that the interface body 102 may be configured and/or easily changed for any other orientation, e.g., a right-hand drive application, or another shape, e.g., a customized application. In other words, the interface body 102 may be configured for a left-hand drive vehicle, a right-hand drive vehicle and/or a customized vehicle application. Therefore, the modularity and/or adaptability of the pedal device 100 may be further enhanced and/or increased, in particular since only the interface body 102 may be adapted for the particular application.

### REFERENCE SIGNS

- 100: pedal device
- 102: interface body
- 104: pedal carrier
- 106: valve carrier
- 108: treadle
- 110: valve
- 112: first side
- 114: second side
- 116: bowl-like shape
- 118: further side
- 120: pedal shaft
- 122: cam
- 124: actuation element
- 126: pedal pad
- 128: lever arm
- 130: access opening of pedal carrier
- 132: access opening of valve carrier
- 134: base portion
- 136: first side portion
- 138: second side portion
- 140: reception
- 142: stepped portion
- 144: stopping element
- 146: fastening element
- 148: recess
- 150: transverse stiffening

## Claims

1. Pedal device (100) for a vehicle, especially utility vehicle, comprising:
an interface body (102) being mountable to a part, in particular to a firewall, of the vehicle;
a pedal carrier (104) for pivotally accommodating a treadle (108); and
a valve carrier (106) for a valve (110) being mountable thereto, the valve (110) being operable by the treadle (108),
wherein the pedal carrier (104) and the valve carrier (106) are mountable or mounted to each other, and the valve carrier (106) and the interface body (102) are mountable or mounted to each other,
wherein the pedal carrier (104) is made of one single piece of metal sheet and/or the valve carrier (106) is made of one single piece of metal sheet and/or the interface body (102) is made of one single piece of metal sheet.

2. Pedal device (100) according to claim 1,
**characterized in that**
the pedal device (100) comprises the valve (110) being operable by the treadle (108), wherein the valve (110) is mountable or mounted to a side (112) of the valve carrier (106) being opposite to a side (114), to which the pedal carrier (104) is mountable or mounted.

3. Pedal device (100) according to claim 1 or 2,
**characterized in that**
the valve carrier (106) has a substantially bowl-like shape (116), which defines an accommodating space for at least partially accommodating the valve (110), when the valve (110) is mounted to the valve carrier (106).

4. Pedal device (100) according to claim 3,
**characterized in that**
the substantially bowl-like shape (116) is substantially wedge-shaped.

5. Pedal device (100) according to claim 4,
**characterized in that**
a wedge angle between a first side (114) of the substantially bowl-like shape (116) facing towards the pedal carrier (104) and a second side (118) of the substantially bowl-like shape (116) facing towards the interface body (102) is between 10 and 45°, in particular 20 and 35°, preferably 28° ± 10%.

6. Pedal device (100) according to one of claims 1 to 5,
**characterized in that**
the pedal device (100) comprises the treadle (108) being pivotally mounted to the pedal carrier (104) for operating the valve (110), wherein the treadle (108) at least comprises an actuation element (124) for operating the valve (110) depending on an amount of pivoting, and wherein the pedal carrier (104) and the valve carrier (106) each comprise an access opening (130, 132) being arranged in an overlapping and/or coinciding manner, through which the actuation element (124) extends for being operationally connectable or connected to the valve (110).

7. Pedal device (100) according to one of claims 1 to 6,
**characterized in that**
the pedal carrier (104) is substantially U-shaped, wherein the U-shape includes a base portion (134), a first side portion (136) and a second side portion (138), wherein each side portion (136, 138) extends from opposite ends of the base portion (134) and each comprises a reception (140) for receiving a pedal shaft (120) of the treadle (108), by which the treadle (108) is pivotable in a mounted state.

8. Pedal device (100) according to one of claims 1 to 7,
**characterized in that**
the pedal carrier (104) comprises a stepped or bent portion (142), wherein, when the pedal carrier (104) and the valve carrier (106) are mounted to each other, the stepped or bent portion (142) abuts at least two side walls (114) of the valve carrier (106), which are oriented in a transverse manner to each other.

9. Pedal device (100) according to claims 7 and 8,
**characterized in that**
the base portion (134) is formed as the stepped portion (142) or further comprises the bent portion.

10. Pedal device (100) according to one of claims 7 to 9,
**characterized in that**
the pedal carrier (104) comprises a stopping element (144) for limiting the pivoting movability of the treadle (108), wherein, optionally, the stopping element (144) extends from the base portion (134).

11. Pedal device (100) according to one of claims 1 to 10,
**characterized in that**
the pedal device (100) comprises one or more fastening elements (146) for fixing the pedal carrier (104) and the valve carrier (106) to each other, wherein, in a mounted state, each fastening element (146) extends through the pedal carrier (104) and the valve carrier (106) such as to protrude from the valve carrier (106) for allowing the valve (110) to be fixable or fixed therewith.

12. Pedal device (100) according to claim 11 in combination with claim 2,
**characterized in that**
each fastening element (146) fixes the pedal carrier (104), the valve carrier (106) and the valve (110) to each other, to thereby form a sub-assembly being removably mountable or mounted to the interface body (102).

13. Pedal device (100) according to claim 11 or 12,
**characterized in that**
the one or more fastening elements (146) comprise at least one bolt, at least one screw and/or at least one rivet, and/or, in case of more than one fastening element (146), any combination thereof.

14. Pedal device (100) according to claim 1 to 13,
**characterized in that**
the valve carrier (106) is made of a steel sheet substantially formed by a deep drawing manufacturing process.

15. Pedal device (100) according to claim 1 to 15,
**characterized in that**
the pedal carrier (104) is made of a steel sheet substantially formed by a bending manufacturing process.
